# EUROPEAN PATENT SPECIFICATION

(11) **EP 2 148 427 B1**
(45) Date of publication and mention of the grant of the patent: **31.08.2011**
(21) Application number: 09165688.4
(22) Date of filing: 16.07.2009
(51) Int. Cl.: H02P 9/04, H02P 9/30, F02D 11/10

(54) **Inverter generator**
Umrichter-Generator
Onduleur-Générateur

(30) Priority: 25.07.2008 JP 2008191784
(43) Date of publication of application: 27.01.2010
(73) Proprietor: Honda Motor Co., Ltd., Minato-ku Tokyo 107-8556 (JP)
(72) Inventor: Hashimoto, Shoji, Saitama 351-0193 (JP); Muronoi, Kazufumi, Saitama 351-0193 (JP)
(74) Representative: Prechtel, Jörg

(56) References cited:
- JP-A- 2004 132 285
- US-A- 4 459 954
- US-A1- 2002 047 419

## Description

### BACKGROUND OF THE INVENTION

### Field of the Invention

This invention relates to an inverter generator, particularly to an inverter generator equipped with a generator unit driven by an internal combustion engine according to the preamble of claim 1.

### Description of the Related Art

Such an inverter generator is known from US 2002047419. Another well-known inverter generator once converts the alternating current outputted by an engine-driven generator unit to direct current and then converts the direct current into alternating current of a predetermined frequency (utility frequency) by driving switching elements with a PWM signal generated using a reference sine wave of the desired output voltage waveform and a carrier. An example of such an inverter generator can be found in Japanese Laid-Open Patent Application No. H4(1992)-355672.

### SUMMARY OF THE INVENTION

In such the inverter generator taught by the references, generally the engine speed is detected by an ignition control circuit and the ignition is terminated when the engine is under over revolution condition. However, since the ignition control circuit is usually constituted by an analog circuit and its operation is controlled in a simple manner by setting constants, when the engine speed drops upon termination of the ignition, the ignition is resumed once again, resulting in another over revolution condition. In other words, the engine may repeat the sequence of the over revolution of terminate ignition, engine speed drops, resume ignition, engine speed rises, over revolution, terminate ignition and so on, and it is thus difficult to bring the over revolution condition to an end.

An object of this invention is therefore to overcome the aforesaid problem by providing an inverter generator that can prevent the engine from experiencing over revolution repeatedly.

In order to achieve the object, this invention provides an inverter generator according to claim 1.

### BRIEF DESCRIPTION OF THE DRAWINGS

The above and other objects and advantages of the invention will be more apparent from the following description and drawings in which:
FIG. 1 is a block diagram giving an overview of an inverter generator according to an embodiment of this invention;
FIG 2 is a waveform diagram for explaining a PWM control by a CPU shown in FIG 1;
FIG. 3 is a flowchart showing the operation of over revolution stop control by the CPU shown in FIG. 1;
FIG. 4 is a time chart for explaining the processing of the FIG. 3 flowchart; and
FIG. 5 is a time chart for explaining the processing of a prior art.

### DETAILED DESCRIPTION OF THE PREFERRED EMBODIMENT

An inverter generator according to an embodiment of this invention will now be explained with reference to the attached drawings.

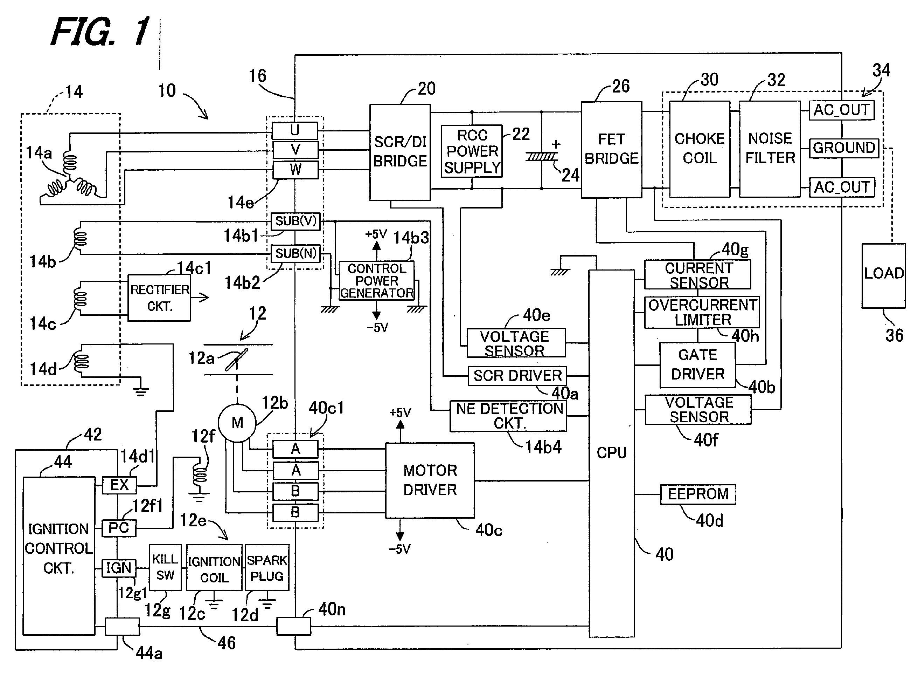

FIG. 1 is a block diagram giving an overview of an inverter generator according to an embodiment of this invention.

The inverter generator is designated by reference numeral 10 in FIG. 1. The generator 10 is equipped with an engine (internal combustion engine) 12 and has a rated output of about 3 kW (AC 100 V, 30 A). The engine 12 is an air-cooled, spark-ignition engine. Its throttle valve 12a is opened and closed by a throttle motor (actuator) 12b constituted as a stepper motor. The engine 12 is started with a recoil starter (not shown).

A circular stator (not shown) is fastened near the cylinder head of the engine 12. The stator is provided with windings that constitute an engine generator unit 14, namely with three-phase (U, V and W) output windings (main windings) 14a and three single-phase windings 14b, 14c and 14d.

A rotor (not shown) that doubles as the flywheel of the engine 12 is installed in the outside of the stator. Permanent magnets (not shown) are attached in the rotor at positions opposite the aforesaid windings 14a etc. and with their radially oriented polarities reversed alternately.

When the permanent magnets of the rotor surrounding the stator rotate, three-phase (U, V and W phase) alternating current is outputted from (generated by) the three-phase output windings 14a and single-phase alternating current is outputted from the single-phase output windings 14b, 14c and 14d.

The three-phase alternating current outputted from (generated by) the output windings 14a of the generator unit 14 is passed through U, V and W terminals 14e to a control board (printed board) 16 and inputted to a converter 20 mounted thereon. The converter 20 is equipped with bridge-connected three thyristors (SCRs) and three diodes DI. The three-phase alternating current outputted by the generator unit 14 is converted to direct current by controlling the conduction angles of the thyristors.

A ringing choke converter (RCC) power supply (direct current stabilized power supply) 22 is connected to the positive and negative electrode side outputs of the converter 20 and supplies the rectified DC power to the three thyristors as operating power. A smoothing capacitor 24 is connected downstream of the RCC power supply 22 to smooth the direct current outputted from the converter 20.

An inverter 26 is connected downstream of the smoothing capacitor 24. The inverter 26 is equipped with a four-FET bridge circuit (FET: field effect transistor (switching element)). As explained further below, the direct current outputted from the converter 20 is converted to alternating current of a predetermined frequency (50 Hz or 60 Hz utility power frequency) by controlling the conducting (ON-OFF) state of the four FETs.

The output of the inverter 26 is passed through a choke coil 30 composed of an LC filter for harmonic suppression and through a noise filter 32 for noise suppression to be applied to output terminals 34, from which it can be supplied to an electrical load 36 through a connector (not shown) or the like.

The control board 16 is equipped with a CPU (central processing unit) 40 having a 32-bit architecture. The CPU 40 controls the conduction angle of the thyristors of the converter 20 though a thyristor (SCR) driver (drive circuit) 40a, the conducting state of the FETs of the inverter 26 through a gate driver 40b, and the operation of the throttle motor 12b through a motor driver 40c. The CPU 40 is equipped with an EEPROM (nonvolatile memory) 40d.

The output of the first single-phase output winding 14b is sent to the control board 16 through sub-terminals 14b1 and 14b2, where it is inputted to a control power generator 14b3 that generates 5 V operating power for the CPU 40. The output from the sub-terminal 14b1 is sent to an NE detection circuit 14b4, where it is converted to a pulse signal and sent to the CPU 40. The CPU 40 counts the pulses of the output from the NE detection circuit 14b4 and calculates (detects) the speed NE of the engine 12.

The output of the second output winding 14c is sent to a full-wave rectifier circuit 14c1, where it is full-wave rectified to produce operating power for the throttle motor 12b, etc.

The output of the third output winding 14d is sent to a second control board (printed board) 42 that is equipped with an ignition control circuit (comprising analog circuit) 44. The output of the third output winding 14d is sent to the second control board 42 through the EX terminal 14d1 to be used as operating power for the ignition control circuit 44.

The ignition control circuit 44 functions as the ignition controller. Specifically, the engine 12 has an ignition unit 12e that ignites the engine 12 and comprises an ignition coil 12c and spark plug 12d, and a pulsar coil 12f that is wound around the stator of the engine generator unit 14 at a location adjacent to the third output winding 14d, etc., and outputs a waveform per one rotation of the flywheel at a predetermined crank angle when rotating relative to the permanent magnets attached in the rotor.

The output of the third output winding 14d is connected to a primary side of the ignition coil 12c to be used also as ignition power. A secondary side of the ignition coil 12c is connected to the spark plug 12d. The output of the pulsar coil 12f is sent to the second control board 42 through the PC terminal 12f1, where it is inputted to the ignition control circuit 44.

The ignition control circuit 44 terminates the current supply to the primary side of the ignition coil 12c at the crank angle detected from the output of the pulsar coil 12f so that the high voltage generated on the secondary side to produce spark between the electrodes of the spark plug 12d, thereby igniting the air-fuel mixture in a combustion chamber of the engine 12.

An emergency stop switch (kill SW) 12g is interposed in a conductive path interconnecting the third output winding 14d and ignition unit 12e to be manipulatable by the user. The switch 12g cuts off the current supply to the ignition unit 12e when being turned ON. The output of the switch 12g is sent to the second control board 42 through the IGN terminal 12g1, where it is inputted to the ignition control circuit 44.

The ignition control circuit 44 is connected via the terminals 44a and 40n to the CPU 40 through a signal line 46. As explained later, when the CPU 40 determines whether the engine 12 is under over revolution condition and sends an H level signal when the result is affirmative. The ignition control circuit 44 terminates the ignition to stop the engine 12.

The CPU 40 is connected to first and second voltage sensors 40e and 40f. The first voltage sensor 40e on downstream of the RCC power supply 22 produces an output or signal proportional to the DC voltage output of the converter 20. The second voltage sensor 40f on downstream of the inverter 26 produces an output or signal proportional to the AC voltage output of the inverter 26. The outputs of the first and second voltage sensors 40e and 40f are sent to the CPU 40.

The CPU 40 is further connected to a current sensor 40g. The current sensor 40g produces an output or signal proportional to the current outputted from the inverter 26, i.e., the current passing through the electrical load 36 when the load 36 is connected.

The output of the current sensor 40g is inputted to the CPU 40 and also to an overcurrent limiter 40h constituted as a logic circuit (hardware circuit) independent of the CPU 40. When the current detected by the current sensor 40g exceeds the tolerance limit, the overcurrent limiter 40h terminates the output of the gate driver 40b to make the output of the inverter 26 zero temporarily.

The CPU 40 is inputted with the outputs of the first and second voltage sensors 40e, 40f and current sensor 40g and based thereon, PWM-controls the FETs of the inverter 26, controls the operation of the throttle motor 12b and performs over revolution stop control.

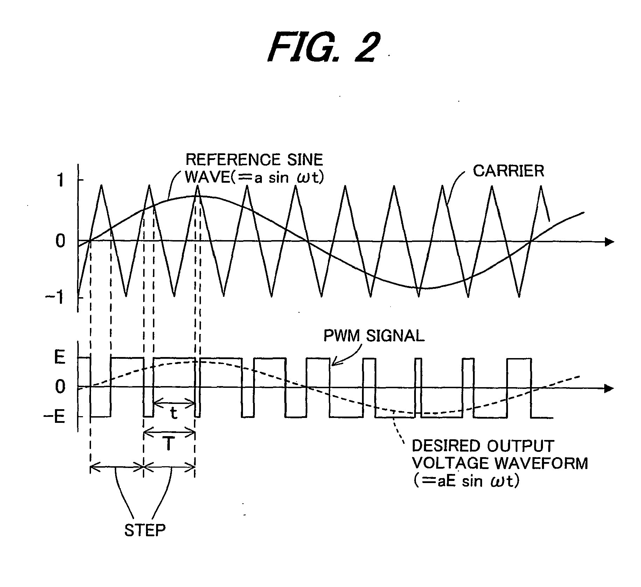

FIG. 2 is a waveform diagram for explaining the PWM control by the CPU 40.

Explaining the PWM control of the FETs of the inverter 26 with reference to FIG. 2, based on a reference sine wave (signal wave; upper solid-line wave) with respect to the predetermined frequency (50 Hz or 60 Hz utility power frequency) of the desired AC output voltage waveform, the CPU 40 uses a comparator (not shown) to compare it with a carrier (e.g., a 20 kHz carrier wave), produces a PWM signal (PWM waveform), namely a variable duty ratio (= ON time t / period T) pulse train, in accordance with PWM (pulse width modulation), and outputs the signal through the gate driver 40b.

The period T (step) of the PWM signal (PWM waveform), which is actually much shorter than shown, is enlarged in FIG. 2 for ease of understanding.

The CPU 40 determines the opening of the throttle valve 12a to establish the desired engine speed calculated based on the AC output determined by the electrical load 36, calculates A phase and B phase output pulses for the throttle stepper motor 12b, and supplies them through the motor driver 40c to the motor 12b from output terminals 40c1, thereby controlling the operation of the motor 12b.

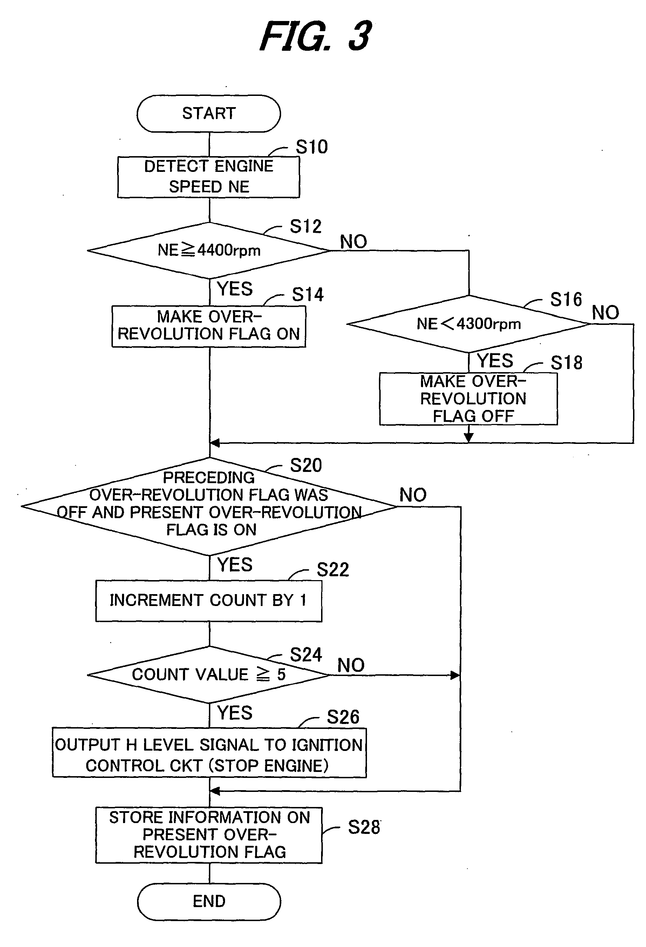

FIG. 3 is a flowchart showing the operation of the aforesand over revolution stop control performed by the CPU 40. The illustrated program is executed at every predetermined time, for example 10 milliseconds.

The program begins in S10, in which the speed NE of the engine 12 is detected based on the output of the NE detection circuit 14b4. The program proceeds to S12, in which it is determined whether the detected engine speed is equal to or greater than a prescribed value (e.g., 4400 rpm) and when the result is affirmative, to S14, in which an over-revolution flag is made ON.

On the other hand, when the result in S12 is negative, the program proceeds to S16, in which it is determined whether the detected engine speed NE is less than a second threshold value (e.g., 4300 rpm) and when the result is affirmative, to 518, in which the over-revolution flag is made OFF. When the result in S16 is negative, the step of S 18 is skipped.

The program then proceeds to S20, in which it is determined whether the over revolution flag in the preceding cycle (i.e., the preceding program execution of FIG. 3 flowchart) was OFF and that in the present cycle (i.e., the present program execution of FIG. 3 flowchart) is ON.

When the result in S20 is affirmative, the program proceeds to S22, in which the count value is incremented by one and to S24, in which it is determined whether the count value is equal to or greater than a predetermine value (e.g., five). When the result in S24 is affirmative, the program proceeds to S26, in which the H level signal (command) is sent to the ignition control circuit 44 through the signal line 46 to terminate the ignition to stop the engine 12.

The program next proceeds to S28, in which the information on the over-revolution flag at the present control cycle such as its bit state is stored in memory. The same processing is conducted when the result in S20 or S24 is negative.

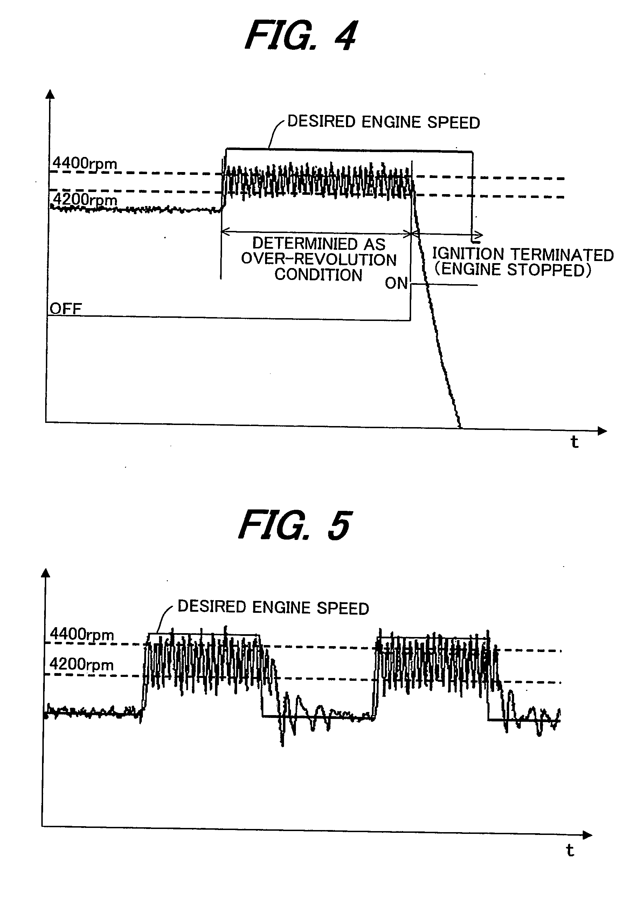

FIG. 4 is a time chart for explaining the processing of the FIG. 3 flowchart and FIG. 5 is a time chart for explaining the processing of the prior art.

As shown in FIG. 5, since the operation of the engine 12 is controlled by the ignition control circuit (comprising analog circuit) in the prior art, the ignition is terminated when the engine speed exceeds 4400 rpm and is resumed with the engine speed at 4200 rpm. As a result, the engine 12 repeats the sequence of the over revolution of terminate ignition, engine speed drops, resume ignition, engine speed rises, over revolution, terminate ignition and so on, and it is thus difficult to bring the over revolution condition to an end. Since the ignition control circuit 44 in this embodiment comprises the analog circuit also, the same problem should arise as long as the ignition control circuit 44 performs the over revolution stop control.

Therefore, this embodiment is configured to determine it is under the over revolution condition and terminate the ignition to stop the engine when the foregoing sequence has been repeated five times. Owing to this configuration, the over revolution of the engine 12 can be reliably prevented. In other words, since the control is performed not by the ignition control circuit 44 but by the CPU 40, a more complicated control compared to that by the ignition control circuit 44 can be achieved, thereby reliably preventing the over revolution of the engine 12.

Further, since the CPU 40 is used to stop the engine 12, it becomes possible to stop the engine 12 after freezing abnormality data, storing error data or the like, so that a failure diagnosis function and service performance can be enhanced also.

As stated above, the embodiment is configured to have an inverter generator (10) having a generator unit (14) that is driven by an internal combustion engine (12) and generates alternating current, a converter (20) that is connected to the generator unit and converts the alternating current to direct current, an inverter (26) that is connected to the converter and converts the direct current to alternating current with switching elements to supply to an electrical load (36), an inverter driver (CPU 40) that comprises an microcomputer, drives the switching elements with a PWM signal generated using a reference sine wave of a desired output voltage waveform and a carrier and makes the alternating current converted in the inverter to the alternating current of a predetermined frequency, an ignition unit (12e) that ignites the engine, and an ignition controller (ignition control circuit 44) that controls operation of the ignition unit (12e), characterized by: an engine speed detector (NE detection circuit 14b4, CPU 40, S 10) that detects speed of the engine (12); and an over revolution determiner (CPU 40, S12 to S24) that determines whether the engine (12) is under over revolution condition based on the detected engine speed, and the inverter driver (CPU 40) sends a command to the ignition controller (44) to terminate the ignition to stop the engine (12), when the engine (12) is under the over revolution condition (S26).

With this, it becomes possible to make the engine 12 avoid from endlessly repeating the sequence of the over revolution of terminate ignition, engine speed drops, resume ignition, engine speed rises, over revolution, terminate ignition and so on, thereby reliably preventing the over revolution of the engine 12.

In the generator, the over revolution determiner counts a number that the engine speed is equal to or greater than a first threshold value and determines that the engine (12) is under the over revolution condition when the count is equal to or greater than a predetermined value (S12 to S26). Specifically, the inverter driver (CPU 40) operates at every control cycle and the over revolution determiner counts the number that the engine speed is equal to or greater than the first threshold value and determines that the engine is under the over revolution condition when the count is equal to or greater than the predetermined value within one of the control cycles (S12 to S26). With this, in addition to the above effect, it becomes possible to determine the over revolution condition of the engine 12 accurately.

Although FETs are used as the switching elements of the inverter in the foregoing, this is not a limitation and it is possible to use insulated gate bipolar transistors (IGBTs) or the like instead.

In an inverter generator having a generator unit driven by an internal combustion engine, an inverter that inverts converted direct current to alternating current with switching elements to supply to an electrical load, an inverter driver that comprises an microcomputer and drives the switching elements with a PWM signal to make the alternating current of a predetermined frequency, an ignition unit that ignites the engine, and an ignition controller that controls operation of the ignition unit, the engine speed is detected (S10) and it is determined whether the engine is under over revolution condition based on the detected engine speed (S12 to S26). The inverter driver sends a command to the ignition controller to terminate the ignition to stop the engine, when the engine is under the over revolution condition (S26), thereby enabling to prevent the engine from experiencing over revolution repeatedly.

## Claims

1. An inverter generator (10) having a generator unit (14) that is driven by an internal combustion engine (12) and generates alternating current, a converter (20) that is connected to the generator unit and converts the alternating current to direct current, an inverter (26) that is connected to the converter and converts the direct current to alternating current with switching elements to supply an electrical load (36), a CPU (40) adapted to drive the switching elements with a PWM signal generated using a reference sine wave of a desired output voltage waveform and a carrier, and to make the alternating current converted in the inverter to the alternating current of a predetermined frequency, an ignition unit (12e) that ignites the engine, an ignition controller (44) that controls operation of the ignition unit (12e),
and an engine speed detector (14b4, 40, S10) that detects speed of the engine (12),
**characterized in that**
the CPU further forms an over revolution determiner (40, S12 to S24) being adapted to determine whether the engine (12) is under over revolution condition based on the detected engine speed,
and the CPU (40) is adapted to send a command to the ignition controller (44) to terminate the ignition to stop the engine (12), when the engine (12) is under the over revolution condition (S26),
wherein the over revolution determiner is adapted to count a number affirming that the engine speed is equal to or greater than a first threshold value (S12) and to determine that the engine (12) is under the over revolution condition when the count is equal to or greater than a predetermined value (S24).

2. The inverter generator according to claim 1, wherein the CPU operates at every control cycle and the over revolution determiner is adapted to count the number that the engine speed is equal to or greater than the first threshold value (S20, S22), and to determine that the engine is under the over revolution condition when the count is equal to or greater than the predetermined value (S24) within one of the control cycles.

3. The inverter generator according to claim 1 or 2, wherein the ignition controller comprises an analog circuit.

## Patentansprüche

1. Umrichter-Generator (10), welcher aufweist: eine Generatoreinheit (14), die vom einem Verbrennungsmotor (12) angetrieben wird und Wechselstrom erzeugt, einen Umwandler (20), der mit der Generatoreinheit verbunden ist und den Wechselstrom in Gleichstrom umwandelt, einen Umrichter (26), der mit dem Umwandler verbunden ist und zur Versorgung einer elektrischen Last (36) mit Schaltelementen den Gleichstrom in Wechselstrom umwandelt, eine CPU (40), die dazu ausgelegt ist, die Schaltelemente mit einem PWM Signal zu betreiben, das mittels einer Referenzsinuswelle eines gewünschten Ausgangsspannungs-Wellenverlaufs und eines Trägers erzeugt wird, und den im Umrichter umgewandelten Wechselstrom zu Wechselstrom einer vorbestimmten Frequenz zu machen, eine Zündeinheit (12e), die den Motor zündet, einen Zündcontroller (44), der den Betrieb der Zündeinheit (12e) steuert, und einen Motordrehzahldetektor (14b4, 40, S10), der eine Drehzahl des Motors (12) erfasst,
**dadurch gekennzeichnet, dass**
die CPU ferner einen Überdrehzahlbestimmer (40, S12 bis S24) aufweist, der dazu ausgelegt ist, auf der Basis der Motordrehzahl zu bestimmen, ob der Motor (12) einem Überdrehzahlzustand unterliegt, und die CPU (40) dazu ausgelegt ist, an den Zündcontroller (44) einen Befehl zu schicken, um die Zündung zum Stoppen des Motors (12) zu beenden, wenn der Motor (12) dem Überdrehzahlzustand unterliegt (S26),
worin der Überdrehzahlbestimmer dazu ausgelegt ist, eine Zahl zu zählen, die feststellt, dass die Motordrehzahl gleich oder größer als ein erster Schwellenwert (S12) ist, und zu bestimmen, dass der Motor (12) dem Überdrehzahlzustand unterliegt, wenn der Zähler gleich oder größer als ein vorbestimmter Wert ist (S24).

2. Der Umrichter-Generator nach Anspruch 1, worin die CPU bei jedem Steuerzyklus arbeitet und der Überdrehzahlbestimmer dazu ausgelegt ist, die Zahl zu zählen, dass die Motordrehzahl gleich oder größer als der erste Schwellenwert ist (S20, S22), und zu bestimmen, dass der Motor dem Überdrehzahlzustand unterliegt, wenn in einem der Steuerzyklen der Zähler gleich oder größer als der vorbestimmte Wert ist (S24).

3. Der Umrichter-Generator nach Anspruch 1 oder 2, worin der Zündcontroller eine analoge Schaltung aufweist.

## Revendications

1. Générateur onduleur (10) comportant une unité de générateur (14) qui est entraînée par un moteur à combustion interne (12) et génère un courant alternatif, un convertisseur (20) qui est connecté à l'unité de générateur et convertit le courant alternatif en courant continu, un onduleur (26) qui est connecté au convertisseur et convertit le courant continu en courant alternatif avec des éléments de commutation pour fournir une charge électrique (36), une unité centrale UC (40) adaptée pour commander les éléments de commutation avec un signal MIL généré en utilisant une onde sinusoïdale de référence d'une forme d'onde de tension de sortie souhaitée et une porteuse, et pour amener le courant alternatif converti dans l'onduleur en courant alternatif d'une fréquence prédéterminée, une unité d'allumage (12e) qui allume le moteur, une unité de commande d'allumage (44) qui commande le fonctionnement de l'unité d'allumage (12e),
et un détecteur de vitesse de moteur (14b4, 40, S10) qui détecte la vitesse du moteur (12),
**caractérisé en ce que**
l'UC forme en outre un détermineur de survitesse (40, S12 à S24) qui est adapté pour déterminer si le moteur (12) est dans une condition de survitesse en se basant sur la vitesse de moteur détectée,
et l'UC (40) est adaptée pour envoyer un ordre à l'unité de commande d'allumage (44) pour terminer l'allumage en vue d'arrêter le moteur (12), lorsque le moteur (12) est dans la condition de survitesse (S26),
dans lequel le détermineur de survitesse est adapté pour compter un nombre affirmant que la vitesse du moteur est supérieure ou égale à une première valeur de seuil (S12) et pour déterminer que le moteur (12) est dans la condition de survitesse lorsque le compte est supérieur ou égal à une valeur prédéterminée (S24).

2. Générateur onduleur selon la revendication 1, dans lequel l'UC fonctionne à chaque cycle de commande et le détermineur de survitesse est adapté pour compter le nombre affirmant que la vitesse du moteur est supérieure ou égale à la première valeur de seuil (S20, S22), et pour déterminer que le moteur est dans la condition de survitesse lorsque le compte est supérieur ou égal à la valeur prédéterminée (S24) dans l'un des cycles de commande.

3. Générateur onduleur selon la revendication 1 ou 2, dans lequel l'unité de commande d'allumage comprend un circuit analogique.
